# EUROPÄISCHE PATENTSCHRIFT

(11) **EP 1 960 220 B1**
(45) Veröffentlichungstag und Bekanntmachung des Hinweises auf die Patenterteilung: **20.01.2010**
(21) Anmeldenummer: 05849296.8
(22) Anmeldetag: 12.12.2005
(51) Int. Cl.: B60J 7/00

(54) **ROLLOKUPPLUNG FÜR EIN FAHRZEUGSONNENDACHROLLO, SOWIE ROLLOBAND, SOWIE FAHRZEUGSONNENDACHROLLO**
ROLLER BLIND COUPLING FOR A VEHICLE SUNROOF ROLLER BLIND, AND ROLLER BLIND STRIP AND VEHICLE SUNROOF ROLLER BLIND
COUPLEUR DE STORE POUR UN STORE DE TOIT OUVRANT DE VÉHICULE, ET BANDE DE STORE, ET STORE DE TOIT OUVRANT DE VÉHICULE

(43) Veröffentlichungstag der Anmeldung: 27.08.2008
(73) Patentinhaber: Webasto AG, 82131 Stockdorf (DE)
(72) Erfinder: GLASL, Sebastian, 81827 München (DE); ROCKELMANN, Andreas, 81249 München (DE); KLOTZ, Steven, Henry, Commerce Township, Michigan 48382 (US); MCCALL, Anthony, Eastpointe, Michigan 48021 (US)
(74) Vertreter: Epping - Hermann - Fischer
(86) Internationale Anmeldenummer: PCT/DE2005/002243
(87) Internationale Veröffentlichungsnummer: WO 2007/068217

(56) Entgegenhaltungen:
- DE-A1- 19 739 919
- DE-A1-102005 024 657
- US-A1- 2002 135 198
- PATENT ABSTRACTS OF JAPAN Bd. 2000, Nr. 19, 5. Juni 2001 (2001-06-05) -& JP 2001 055046 A (OI SEISAKUSHO CO LTD), 27. Februar 2001 (2001-02-27)

## Beschreibung

Die vorliegende Erfindung betrifft eine Rollokupplung für ein Fahrzeugsonnendachrollo gemäß dem Oberbegriff des Anspruchs 1, sowie ein Rolloband gemäß dem Oberbegriff des Anspruch 13, sowie ein Fahrzeugsonnendachrollo gemäß dem Oberbegriff des Anspruchs 18 und ein Fahrzeugsonnendachrollo gemäß dem Oberbegriff des Anspruchs 21.

Eine Rollokupplung wird in einem Fahrzeugsonnendachrollo zur Koppelung eines Rollobandes und eines Zugspriegels verwendet. Ein hier beispielhaft beschriebenes Fahrzeugsonnendachrollo gemäß dem Stand der Technik umfasst zwei Führungsschienen, ein flexibles Flächenelement, eine Aufwickeleinrichtung für das flexible Flächenelement und die Rollobänder, sowie eine Antriebseinrichtung. Ferner umfasst ein Fahrzeugsonnendachrollo den oben bereits erwähnten Zugspriegel und die Rollokupplungen. Das Fahrzeugsonnendachrollo ist vorzugsweise im Dachhimmel eines Kraftfahrzeuges unterhalb eines Fahrzeugsonnendaches, d.h. einem zumindest abschnittsweise durchsichtigen und vorteilhafterweise verschiebbaren oder aufstellbaren Fahrzeugsonnendach verbaut. Die Führungsschienen sind vorzugsweise in Längsrichtung des Fahrzeuges ausgerichtet und säumen die Seitenbereiche des Fahrzeugsonnendaches. Es ist weiterhin vorgesehen, dass die Aufwickeleinrichtung für das flexible Flächenelement und die Aufwickeleinrichtung für die flachen Rollobänder zwischen den Führungsschienen, vorzugsweise endseitig der Führungsschienen angeordnet sind. Es ist weiterhin vorgesehen, dass das flexible Flächenelement randseitig mit den flachen Rollobändern verbunden ist, wobei die flachen Rollobänder in den Führungsschienen linear verschiebbar aufgenommen sind. Es ist weiterhin vorgesehen, dass das flexible Flächenelement randseitig mit dem Zugspriegel verbunden ist, wobei der Zugspriegel zwischen den Führungsschienen angeordnet und ebenfalls verschiebbar in den Führungsschienen aufgenommen ist. Zur Verbindung der flachen Rollobänder und dem Zugspriegel ist jeweils eine Rollokupplung vorgesehen. Die Rollokupplung ist zumindest abschnittsweise in der jeweiligen Führungsschiene aufgenommen und ist in Längsrichtung der Führungsschienen verschiebbar in den Führungsschienen gelagert. Die Anordnung aus flexiblen Flächenelement, randseitigen flachen Rollobändern, Rollokupplungen und dem frontseitigen Zugspriegel ist demnach geeignet in den Führungsschienen entlang der Fahrzeuglängsachse verschoben zu werden. Dementsprechend kann durch Verschieben der Anordnung aus flexiblem Flächenelement, Zugspriegel und den randseitigen Rollobändern das Glasschiebedach wahlweise verdeckt, teilweise verdeckt oder aber vollständig freigegeben werden. Entsprechend diesem Konzept kann das Fahrzeugsonnendachrollo beispielsweise durch manuelle Betätigung des Zugspriegels, durch Antrieb der Rollobänder oder durch direkten Antrieb der Rollokupplung erfolgen.

Die US 2002/0135198 A1 offenbart eine Laderaumabdeckung für ein Kraftfahrzeug mit zwei in dem Kraftfahrzeug fixierten Schienen und zwei Schlitzen. Ein Gehäuse ist in dem Fahrzeug angeordnet und erstreckt sich transversal zu den Schienen zwischen hinteren Enden. Die Schlitze nehmen einen drehbaren Schaft auf, auf den ein flexibles Abdeckband aufgewickelt ist. Das Abdeckband hat eine Vorderkante, die mit einem Versteifungsstab ausgestattet ist, der äußere Enden aufweist, in denen Gleitelemente angeordnet sind, die längs der Schienen und in dem Gehäuse verschiebbar sind.

Die DE 197 39 919 A1 offenbart ein Sonnenrollo für ein Fahrzeugdach, mit einem einer Dachöffnung zugeordneten Deckel und einer unterhalb des Deckels angeordneten, auf eine Wickelspule selbsttätig aufwickelbaren Rollobahn. Die Wickelspule ist an dachseitigen Halterungen drehbar angebracht. Die gegenüberliegenden Seitenränder der Rollobahn sind in Rollo-Bewegungsrichtung verschiebbar in Führungsschienen geführt, aber quer zur Rollo-Bewegungsrichtung gegen Herausziehen aus den Führungsschienen festgelegt. Die Führungsschienen weisen Führungsnuten auf mit einem gegenüber der Ebene der Rollobahn abgewinkelten Führungsbereich.

Probleme können sich jedoch bei der Montage einer derartigen Rollokupplung ergeben. Da Rollokupplung und Rolloband in der Führungsschiene laufen und dementsprechend nur einen Freiheitsgrad haben (Fahrzeug X-Richtung) muss auch in dieser Bewegung die Zusammenfügung beider Bauteile stattfinden. Dies ist aber ein Widerspruch, da auch in dieser Richtung die Kraftübertragung stattfindet.

Erfindungsgemäß wird diese Aufgabe durch eine Rollokupplung mit den kennzeichnenden Merkmalen des Anspruchs 1 gelöst. Dadurch, dass der Rollobandaufnahmebereich zur formschlüssigen Verbindung mit einem Rolloband eingerichtet ist, kann eine Kraftübertragung mindestens in der gewünschten Richtung stattfinden. Darüber hinaus kann eine einfache Montage, beispielsweise auch eine einfache Demontage in einer Werkstatt, gewährleistet werden. Die Ausgestaltung der Rollokupplung, dass die Rollokupplung einen Grundkörper, sowie ein Schnappverbindungselement umfasst, wobei der Rollobandaufnahmebereich zwischen dem Schnappverbindungselement und dem Grundkörper ausgebildet ist, eignet sich in besonders vorteilhafter Weise um den gewünschten zur formschlüssigen Verbindung geeigneten Rollobandaufnahmebereich bereitzustellen.

In einer vorteilhaften Ausgestaltung der vorgeschlagenen Rollokupplung kann vorgesehen sein, dass der Rollobandaufnahmebereich, insbesondere das Schnappverbindungselement mit mindestens einer Aussparung zur formschlüssigen Befestigung eines korrespondierenden Anschlusselementes eines Rollobandes ausgestattet ist. Zur Bereitstellung einer geeigneten Aussparung, in welche beispielsweise ein geeigneter Vorsprung eines Rollobandes in formschlüssiger Weise eingebracht werden kann, eignet sich eine Aussparung innerhalb des Schnappverbindungselementes. Denkbar ist selbstverständlich auch eine entsprechende Aussparung innerhalb des Grundkörpers, die beispielsweise zu Sicherungszwecken von dem Schnappverbindungselement überdeckt wird.

Vorteilhafterweise kann weiterhin vorgesehen sein, dass der Rollobandaufnahmebereich, insbesondere das Schnappverbindungselement mit mindestens einem Vorsprung zum formschlüssigen Eingriff in ein korrespondierenden Anschlusselementes eines Rollobandes ausgestattet ist. Hier wird eine invertierte Ausführungsform der zuvor genannten Kombination aus Aussparung im Schnappverbindungselement und einem korrespondierenden Vorsprung in dem Rolloband vorgeschlagen, nämlich eine Verlagerung des Vorsprunges an das Schnappverbindungselement und einer Aussparung in den Bereich des Rollobandes bzw. des Anschlusselementes des Rollobandes. Durch diese Maßnahme kann die Rollokupplung an individuelle konstruktive Gegebenheiten angepasst werden.

Es kann weiterhin vorteilhafterweise vorgesehen sein, dass der Rollobandaufnahmebereich L-förmig, T-förmig, U-förmig oder in Form einer "1" ausgestaltet ist. Eine derartige Form eignet sich in besonders vorteilhafter Weise zur Bereitstellung eines Rollobandaufnahmebereiches, der eine formschlüssige Verbindung mit einem Rolloband gewährleisten kann, da die genannten Formen hinterschnittene Aussparungen ermöglichen, in die Vorsprünge des Rollobandes eingreifen können.

In einer vorteilhaften Weiterbildung der vorliegenden Erfindung kann vorgesehen sein, dass das Schnappverbindungselement schwenkbar, insbesondere über eine Biegefalz mit dem Grundkörper verbunden ist. Dementsprechend wird eine einfache und effektive Möglichkeit bereitgestellt, um beispielsweise ein geeignetes Rolloband in den Rollobandaufnahmebereich einzulegen bzw. einzuschieben. Anschließend kann der Rollobandaufnahmebereich geschlossen werden und die formschlüssige Verbindung aufrecht erhalten werden. Ebenfalls wir durch die Möglichkeit zum Öffnen des Rollobandaufnahmebereiches eine Möglichkeit zur Lösung der formschlüssigen Verbindung bereitgestellt, indem das Schnappverbindungselement aufgeklappt und das Rolloband aus dem Rollobandaufnahmebereich, insbesondere aus der formschlüssigen Verbindung, herausgenommen bzw. herausgezogen werden kann.

In einer weiteren vorteilhaften Ausgestaltung der vorliegenden Erfindung kann vorgesehen sein, dass das Schnappverbindungselement mit mindestens einem Rastverbindungsmittel ausgestattet ist, welches in eine Rastaussparung des Grundkörpers einrasten kann. Durch diese Maßnahme kann ein schwenkbar mit dem Grundkörper und zum Schließen eines Rollobandaufnahmebereiches geeignetes Schnappverbindungselement in einer geschlossenen Position festgelegt werden. Darüber hinaus bietet eine Rastverbindung grundsätzlich die Möglichkeit eines nachträglichen Lösens der Verbindung, so dass das Schnappverbindungselement nachträglich, beispielsweise zu Demontagezwecken des Fahrzeugsonnendachrollos in einer Werkstatt, aufgeklappt werden kann. Dementsprechend kann das Rolloband aus der Rollokupplung herausgenommen werden.

Es kann weiterhin vorteilhafterweise vorgesehen sein, dass zwei Schnappverbindungselemente vorgesehen sind, die jeweils mit einem Rastverbindungsmittel ausgestattet sind, die in eine jeweils zugeordnete Rastaussparung des Grundkörpers einrasten können. Durch die hier vorgeschlagene geteilte Ausführungsform der Schnappverbindungselemente kann weiterhin vorteilhafterweise auf die konstruktiven Belange eingegangen werden. Auch können beispielsweise zwei Rollobänder aufgenommen werden, so dass die Rollokupplung als T-Verbinder zweier Rollobänder fungiert.

In einer weiteren vorteilhaften Ausgestaltung der vorliegenden Erfindung kann vorgesehen sein, dass es sich bei der Rollokupplung um ein Formelement aus Kunststoff handelt. Kunststoff eignet sich in vorteilhafter Weise als Werkstoff für die Rollokupplung, da er sehr witterungsbeständig und leicht formbar ist.

Es kann weiterhin vorteilhafterweise vorgesehen sein, dass die Rollokupplung einstückig ausgebildet ist. Die einstückige Ausgestaltung der Rollokupplung bietet sich insbesondere vor produktionstechnischen Gesichtspunkten als sehr rationale Herstellungsmöglichkeit an.

In einer weiteren vorteilhaften Ausgestaltung der vorliegenden Erfindung kann vorgesehen sein, dass die Rollokupplung mit einem Metalleinleger ausgestattet ist. Dementsprechend kann die Steifigkeit der Rollokupplung in geeigneter Weise erhöht werden.

In einer weiteren vorteilhaften Ausgestaltung der vorliegenden Erfindung kann vorgesehen sein, dass die Rollokupplung mit Führungsmitteln zur verschiebbaren Aufnahme in einer Führungsschiene ausgestattet ist. Dementsprechend kann die Rollokupplung neben ihrer Verbindungsfunktion eine weitere Funktion, nämlich die eines Führungsmittels wahrnehmen, so dass durch eine derart ausgestaltete Rollokupplung eine sichere Führung der Rollokupplung als solches, aber auch der angeschlossenen Elemente, wie Zugspriegel und Rolloband innerhalb einer geeigneten Führungsschiene gewährleistet werden kann.

In einer vorteilhaften Weiterbildung der erfindungsgemäßen Rollokupplung kann vorgesehen sein, dass die Rollokupplung mit einem Antriebselement, insbesondere einem Steigungskabel, einem Seil und/oder einem Zahnriemen verbunden ist. Dementsprechend kann die Rollokupplung direkt angetrieben werden, so dass ein Verfahren innerhalb der Führungsschiene sichergestellt werden kann.

Eine weitere Aufgabe der vorliegenden Erfindung liegt darin, ein vorteilhaftes Rolloband für ein Fahrzeugsonnendachrollo bereitzustellen. Es ist beispielsweise bekannt, das Rolloband als Kunststoffstreifen auszuführen und mit einem Metallnagel an dessen vorderem Ende zu fixieren. Der Nagel wird zwischen Zugspriegel und Rollokupplung wie in einem Sandwich gelagert. Beide Bauteile sind mit einer Schraube verbunden.

Diese Lösung ist jedoch für ein Rolloband, welches aus einem anderen Material als Kunststoff besteht nicht möglich, da der Nagel in das weiche Kunststoffmaterial hineingebogen werden muss um die Rückstellung auszugleichen. Wird das Rolloband aus einem anderen Material, beispielsweise einem zu harten Material hergestellt, kann der Nagel nicht hineingebogen werden.

Dementsprechend ist es eine Aufgabe der vorliegenden Erfindung ein Rolloband für ein Fahrzeugsonnendachrollo bereitzustellen, welches die Vorteile eines Rollobandes aus einem harten und daher widerstandsfähigem und belastbarem Material, welches jedoch nicht zum Einbiegen eines Metallnagels geeignet ist, mit einer Befestigungsmöglichkeit, die beispielsweise das Einbiegen eines Nagels ermöglicht, zu verbinden.

Erfindungsgemäß wird diese Aufgabe durch ein Rolloband mit den kennzeichnenden Merkmalen des Anspruchs 13 gelöst. Dadurch, dass das Rolloband mindestens ein Anschlusselement, sowie einen Metallstreifen aufweist, wobei das Anschlusselement aus einem Kunststoff besteht. Das Anschlusselement ist an den Metallstreifen angespritzt oder angeclipst.

Dementsprechend kann eine funktionale Trennung stattfinden, d.h. der Anschlussbereich weist die entsprechenden Eigenschaften für eine Verbindung mit einer Rollokupplung auf, wohingegen der Metallstreifen die notwendigen Eigenschaften, beispielsweise eine vorteilhafte Stabilität und Zug- Druckfestigkeit zur Aufnahme und Führung eines flexiblen Flächenelementes aufweist. Eine derartige Verbindung zwischen Metallstreifen und Anschlusselement kann vor einem produktionstechnischen Hintergrund vorteilhafterweise hergestellt werden.

Es kann weiterhin vorteilhafterweise vorgesehen sein, dass der Metallstreifen mit Löchern oder Stanzungen zur Befestigung des flexiblen Flächenelementes eingerichtet ist. Dementsprechend kann beispielsweise eine flexibles Flächenelement in Form eines textilen Gewebes in einfacher Art und Weise mit dem Metallstreifen vernäht werden, wobei die Löcher oder Stanzungen als Durchtrittsöffnungen für einen Faden benutzt werden können.

Zur Herstellung einer formschlüssigen Verbindung des Rollobandes mit einer geeigneten Rollokupplung kann vorgesehen sein, dass das Anschlusselement mit einem Vorsprung ausgestattet ist. Ein derartiger Vorsprung sollte zur Herstellung einer formschlüssigen Verbindung geeignet sein.

Alternativ oder auch zusätzlich kann vorgesehen sein, dass das Anschlusselement mit einer Aussparung ausgestattet ist. Auch für ein derartig ausgestaltetes Anschlusselement kann in vorteilhafter Weise eine formschlüssige Verbindung zu einer geeigneten Rollokupplung hergestellt werden, nämlich durch einen korrespondierenden Vorsprung in einem Rollobandaufnahmebereich der Rollokupplung, der zum Eingriff in die Aussparung des Anschlusselementes eingerichtet ist.

In einer weiteren vorteilhaften Ausgestaltung der vorliegenden Erfindung, insbesondere eines zuvor genannten Vorsprungs für eine formschlüssige Verbindung, kann vorgesehen sein, dass das Anschlusselement eine T-förmige, L-förmige, U-förmige Gestalt oder die Gestalt einer "1" aufweist. Derartige Formen eignen sich in besonders vorteilhafter Weise, um eine formschlüssige Verbindung mit einer geeigneten Rollokupplung herzustellen, insbesondere kann durch den Hinterschnitt derartiger Formen eine formschlüssige Verbindung hergestellt werden, die ein Herausziehen des Rollobandes verhindert.

Eine weitere Aufgabe der vorliegenden Erfindung liegt darin, ein Fahrzeugsonnendachrollo bereitzustellen, welches leicht montiert und gewartet werden kann.

Erfindungsgemäß kann diese Aufgabe durch ein Fahrzeugsonnendachrollo mit den kennzeichnenden Merkmalen des Anspruchs 20 gelöst werden. Dadurch, dass das Fahrzeugsonnendachrollo mit einer Rollokupplung gemäß einem der Ansprüche 1 bis 13 ausgestattet ist, kann eine leichte Montage des Fahrzeugsonnendachrollos gewährleistet werden, da ein Zusammenfügen bzw. Trennen der jeweiligen Rollokupplung und dem Rolloband auf einfache Art und Weise, insbesondere mit einer formschlüssigen Verbindung gewährleistet werden kann.

In einer vorteilhaften Weiterbildung des Fahrzeugsonnendachrollos kann vorgesehen sein, dass es sich bei dem Rolloband um ein Rolloband gemäß einem der Ansprüche 14 bis 19 handelt. Dementsprechend können die Vorteile des erfindungsgemäßen Rollobandes, insbesondere die Vorteile, die sich aus der angepassten Materialwahl ergeben, in dem vorgeschlagenen Fahrzeugsonnendachrollo zusammen mit der erfindungsgemäß vorgeschlagenen Rollokupplung genutzt werden. Beispielsweise wird der Herstellungsvorgang zur Ausgestaltung eines entsprechend korrespondierenden Anschlusselementes wesentlich erleichtert, da das Anschlusselement aus Kunststoff beispielsweise angespritzt werden kann.

In einer vorteilhaften Ausgestaltung des vorgeschlagenen Fahrzeugsonnendachrollos kann vorgesehen sein, dass die Führungsschiene mit einer Montagevorrichtung ausgestattet ist, die an einer vorbestimmten Stelle der Führungsschiene angebracht ist und zur Betätigung des/der Schnappverbindungselemente eingerichtet ist. Das Schwenken des/der Schnappverbindungselemente kann durch einen Werker, sprich manuell oder durch eine Montagevorrichtung in der Führungsschiene erfolgen. Die Montagevorrichtung in der Führungsschiene sitzt an einer bestimmten Stelle und beim Verfahren der Rollokupplung in der Schiene drückt die Montagevorrichtung, die beispielsweise als Rampe ausgestaltet sein kann auf das Schnappverbindungselement und schwenkt das Schnappverbindungselement.

Eine weitere Aufgabe der vorliegenden Erfindung liegt darin, ein Fahrzeugsonnendachrollo vorzuschlagen, bei dem eine Verbindung zwischen der Rollokupplung und dem Rolloband auf einfache Art und Weise hergestellt werden kann. Insbesondere soll die Anzahl der Verbindungsmöglichkeiten zwischen der Rollokupplung und dem Rolloband vergrößert werden.

Erfindungsgemäß wird diese Aufgabe durch ein Fahrzeugsonnendachrollo mit den kennzeichnenden Merkmalen des Anspruchs 23 gelöst. Dadurch, dass es sich bei dem Rolloband um ein Rolloband gemäß einem der Ansprüche 14 bis 19 handelt.

Dementsprechend besteht durch die Materialwahl des Anschlusselementes auch die Möglichkeit eine Verbindung zu wählen, bei der das Anschlusselement in angemessener Weise deformiert werden kann, beispielsweise durch Eindrücken eines Nagels oder einer vergleichbaren Einrichtung.

In einer vorteilhaften Weiterbildung des erfindungsgemäßen Fahrzeugsonnendachrollos kann vorgesehen sein, dass es sich bei der Rollokupplung um eine Rollokupplung nach einem der Ansprüche 1 bis 13 handelt. Dementsprechend können die bereits oben beschriebenen Vorteile einer erfindungsgemäßen Rollokupplung für das Fahrzeugsonnendachrollo nutzbar gemacht werden.

In einer vorteilhaften Ausgestaltung des vorgeschlagenen Fahrzeugsonnendachrollos kann vorgesehen sein, dass die Führungsschiene mit einer Montagevorrichtung ausgestattet ist, die an einer vorbestimmten Stelle der Führungsschiene angebracht ist und zur Betätigung des/der Schnappverbindungselemente eingerichtet ist. Das Schwenken des/der Schnappverbindungselemente kann durch einen Werker, sprich manuell oder durch eine Montagevorrichtung in der Führungsschiene erfolgen. Die Montagevorrichtung in der Führungsschiene sitzt an einer bestimmten Stelle und beim Verfahren der Rollokupplung in der Schiene drückt die Montagevorrichtung, die beispielsweise als Rampe ausgestaltet sein kann auf das Schnappverbindungselement und schwenkt das Schnappverbindungselement.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische isometrische Ansicht auf eine erfindungsgemäße Rollokupplung mit einem erfindungsgemäßen Anschlusselement in einem verbauten Zustand;

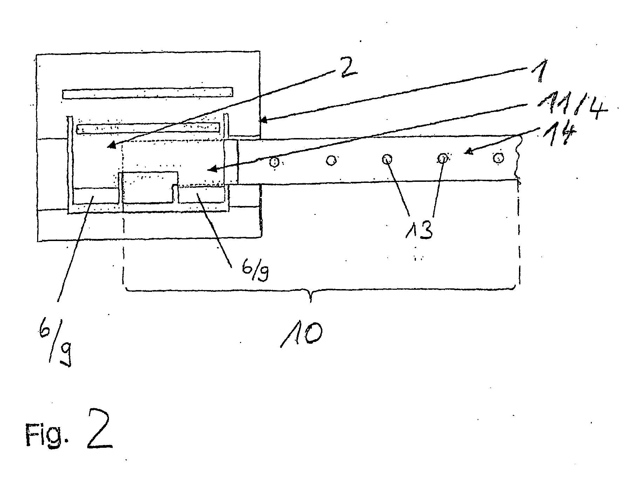

- Fig. 2: eine schematische Draufsicht auf eine erfindungsgemäße Rollokupplung mit einem erfindungsgemäßen Anschlusselement in einem verbauten Zustand;
- Fig. 3: eine schematische Seitenansicht auf eine erfindungsgemäße Rollokupplung mit einem erfindungsgemäßen Anschlusselement in einem verbauten Zustand;
- Fig. 4: eine schematische Ansicht von unten auf eine erfindungsgemäße Rollokupplung mit einem erfindungsgemäßen Anschlusselement in einem verbauten Zustand;
- Fig. 5: eine schematische Ansicht von unten auf eine erfindungsgemäße Rollokupplung mit einem erfindungsgemäßen alternativen Anschlusselement in einem verbauten Zustand;
- Fig. 6: eine schematische Draufsicht auf eine erfindungsgemäße Rollokupplung mit einem erfindungsgemäßen alternativen Anschlusselement in einem verbauten Zustand;
- Fig. 7: eine schematische Schnittansicht auf eine erfindungsgemäße Rollokupplung mit einem erfindungsgemäßen alternativen Anschlusselement in einem verbauten Zustand;
- Fig. 8: eine schematische Ansicht von unten auf eine erfindungsgemäße Rollokupplung mit einem erfindungsgemäßen Anschlusselement in einem verbauten Zustand;

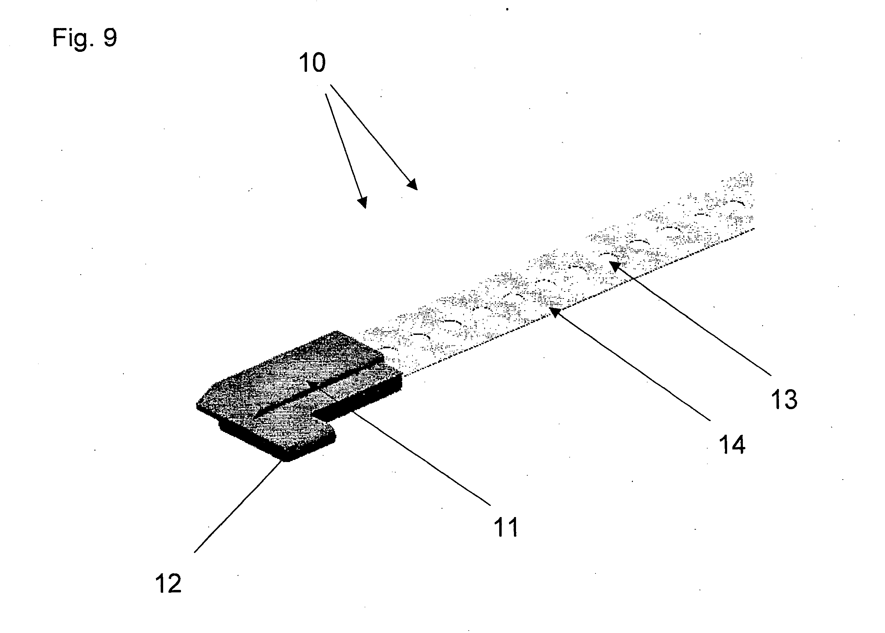

- Fig. 9: eine perspektivische Ansicht auf ein erfindungsgemäßes Rolloband;
- Fig. 10: eine perspektivische Ansicht auf eine erfindungsgemäße Rollokupplung in einer Ausführung mit zwei Schnappverbindungselementen;

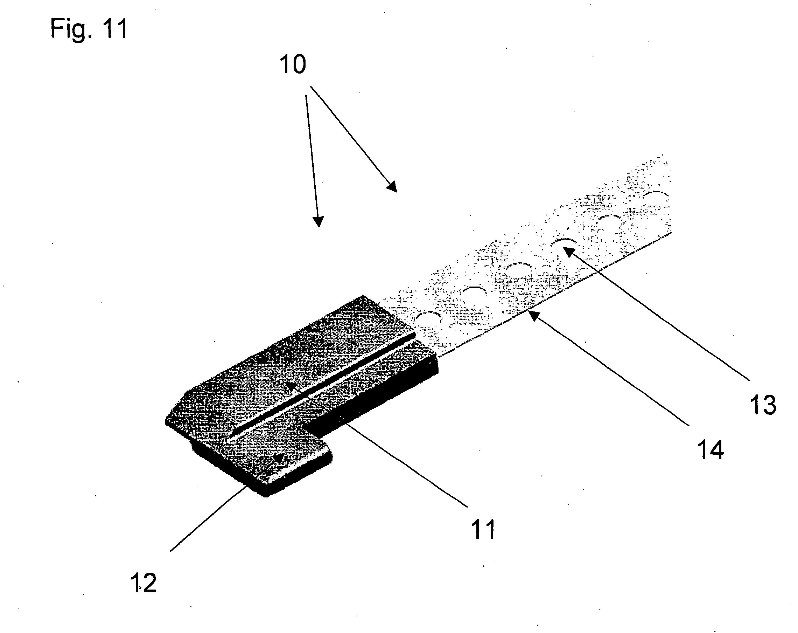

- Fig. 11: eine perspektivische Ansicht auf ein erfindungsgemäßes Rolloband;
- Fig. 12: eine perspektivische Ansicht auf eine erfindungsgemäße Rollokupplung in einer Ausführung mit einem Schnappverbindungselement;
- Fig. 13: eine Schnittansicht auf eine erfindungsgemäße Rollokupplung in einer Führungsschiene;
- Fig. 14: eine Schnittansicht auf eine erfindungsgemäße Rollokupplung in einer Führungsschiene.

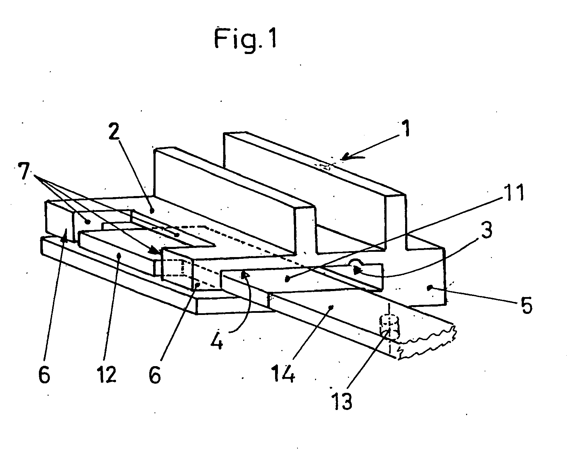

Zunächst wird auf Fig. 1 Bezug genommen.

Bei der erfindungsgemäßen Rollokupplung 1 handelt es sich im Wesentlichen um ein Formelement aus Kunststoff, wobei die Rollokupplung 1 einen Grundkörper 5, sowie ein schwenkbar oberhalb des Grundkörpers 5 angeordnetes Schnappverbindungselement 2 umfasst. Der Grundkörper 5 als auch das Schnappverbindungselement 2 sind hier im Wesentlichen flächig ausgestaltet, können jedoch auch andere Formen annehmen.

Das Schnappverbindungselement 2 ist über eine Biegefalz 3 in einer Ebene oberhalb des Grundkörpers 5 angeordnet. Darüber hinaus weist das Schnappverbindungselement 2 zwei im Querschnitt etwa L-förmige Rastverbindungsmittel 6 auf, die endseitig des Schnappverbindungselementes 2 angeordnet sind und dazu eingerichtet sind, in geeignete Rastaussparungen 9 innerhalb des Grundkörpers 5 einzurasten und eine lösbare Verbindung einzugehen. Vorteilhafterweise erstreckt sich hierzu jeweils ein Schenkel des L-förmigen Rastverbindungsmittels 6 in Richtung des Grundkörpers 5. Selbstverständlich kann auch nur ein oder auch mehrere Rastverbindungsmittel 6 vorgesehen sein, die selbstverständlich auch abweichend ausgestaltet sein können.

Ferner ist das Schnappverbindungselement 2 mit einer Aussparung 7 ausgestattet, wobei sich die Aussparung 7 vorzugsweise zwischen den Rastverbindungsmitteln 6 befindet. Durch den Bereich zwischen dem Grundkörper 5, dem Schnappverbindungselement 2 und der Aussparung 7 des Schnappverbindungselementes 2 wird ein Rollobandaufnahmebereich 4 ausgebildet, der zur formschlüssigen Aufnahme eines Rollobandes 10 mit einem entsprechendem Anschlusselement 11 eingerichtet ist, dergestalt, dass ein Vorsprung 12 des Rollobandes 10 oder eines geeigneten Anschlusselementes 11 des Rollobandes 10 in den Rollobandaufnahmebereich 4 eingelegt bzw. eingeschoben werden kann und ein Herausziehen des Rollobandes 10 wegen des Formschlusses von Vorsprung 12 und Aussparung 7 unmöglich gemacht wird. Bevorzugte Ausführungsformen des Rollobandaufnahmebereiches 4 stellen die L-Form oder auch die T-Form dar. Denkbar ist auch die Form eines "U" oder die einer "1". Genannte Formen eröffnen die Möglichkeit, ein entsprechend korrespondierendes Rolloband 10 bzw. Anschlusselement 11 für ein Rolloband 10 durch Formschluss zu fixieren. Denkbar ist selbstverständlich auch eine invertierte Anordnung, d.h. das Anschlusselement 11 weist eine Aussparung auf, in welche ein Vorsprung des Schnappverbindungselementes 2 eingreifen und eine formschlüssige Verbindung ausbilden kann.

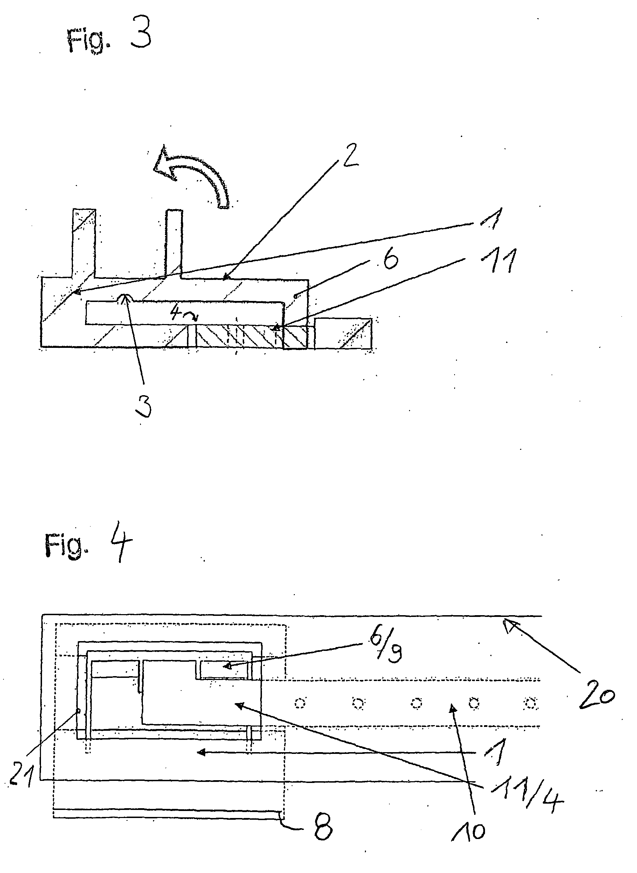

Die Figuren zeigen einen Zustand bei dem das Rolloband 10 in einer formschlüssigen Verbindung mit der Rollokupplung 1 steht. Dies entspricht einem verbauten Zustand in einer Führungsschiene 20 eines Fahrzeugsonnendachrollos. Die formschlüssige Verbindung kann auf einfache Art und Weise und vor allen Dingen ohne den Einsatz von Werkzeug gelöst werden. In Fig. 3 ist ein Verschwenken des Schnappverbindungselementes 2 angedeutet, welches zur Lösung der formschlüssigen Verbindung führen würde, indem das Schnappverbindungselement 2 hochgeklappt würde.

In Fig. 4 ist die erfindungsgemäße Rollokupplung in einem größeren Zusammenhang dargestellt. Es ist eine Führungsschiene 20 für ein Fahrzeugsonnendachrollo dargestellt, in dem eine Rollokupplung 1 verschiebbar aufgenommen ist. Hier ist die Position der erfindungsgemäßen Rollokupplung 1 vorteilhaft zu ersehen. Auch ist ein Zugspriegelanschlussbereich 8 erkennbar, der zumindest abschnittsweise aus der Führungsschiene 20 hinausragt. Des Weiteren ist erkennbar, dass sich der Rollobandaufnahmebereich 4 in Rollobandrichtung und damit vorzugsweise in Fahrzeuglängsrichtung erstreckt, während der Zugspriegelanschlussbereich 8 in etwa senkrecht dazu ausgerichtet ist. Unter der Voraussetzung, dass zwei Führungsschienen 20 vorgesehen sind, die sich in Fahrzeuglängsrichtung (X-Richtung) entlang des Fahrzeugsonnendaches erstrecken, so stehen sich die Zugspriegelanschlussbereiche 8 gegenüber und es kann ein
Zugspriegel 31 zwischen den Zugspriegelanschlussbereichen 8 angebracht werden. Auch ist erkennbar wie sich die Rollobänder 10 in Richtung der Führungsschienen 20 und damit in Fahrzeuglängsrichtung (X-Richtung) erstrecken. Für den Regelfall zweier sich gegenüberliegender Führungsschienen 20 bzw. Rollobänder 10, kann ein (hier nicht dargestelltes) flächiges Element, beispielsweise eine Tuchbespannung, zwischen dem Zugspriegel 31 und den Rollobändern 10 aufgespannt werden. Die Anordnung aus Zugspriegel 31, Rollokupplungen 1 und Rollobändern 10 kann entsprechend verfahren werden und das flächige Element dient dementsprechend zum Verschließen des Fahrzeugsonnendaches. Auch kann vorgesehen sein, dass die Rollokupplung mit geeigneten Führungsmitteln ausgestattet ist, die ein reibungsloses Verschieben innerhalb der Führungsschiene 20 ermöglichen, wobei eine Festlegung in andere Raumrichtungen bzw. Drehrichtungen, vergleichbar mit einer Linearlagerung, erfolgen kann.

In Fig. 4 ist weiterhin eine Bohrung 21 innerhalb der Führungsschiene 20 erkennbar. Sofern sich die Rollokupplung 1 in geeigneter Art und Weise über der Bohrung 21 befindet, können die Rastverbindungsmittel 6 über die Rastaussparungen 9 erreicht und die Rastverbindung ggf. gelöst werden. Hierzu kann beispielsweise ein Schraubendreher verwendet werden.

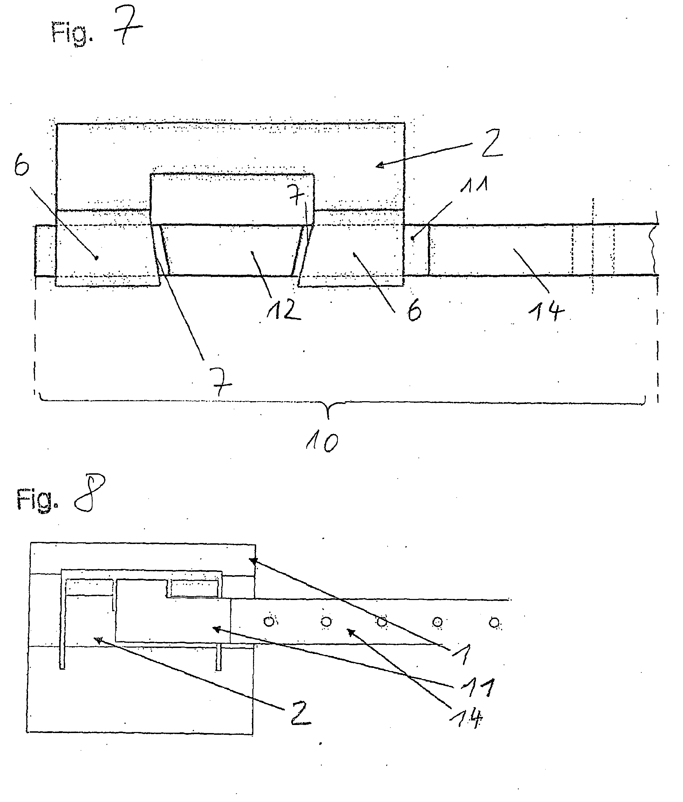

In Fig. 7 ist eine vorteilhafte Anschrägung der Seitenkanten des Vorsprungs 12, sowie der entsprechenden Abschnitte der Aussparung 7 dargestellt. Durch diese Maßnahme kann durch gezielte Kraftflussbeeinflussung einem unbeabsichtigtem Öffnen des Schnappverbindungselementes 2 entgegen gewirkt werden.

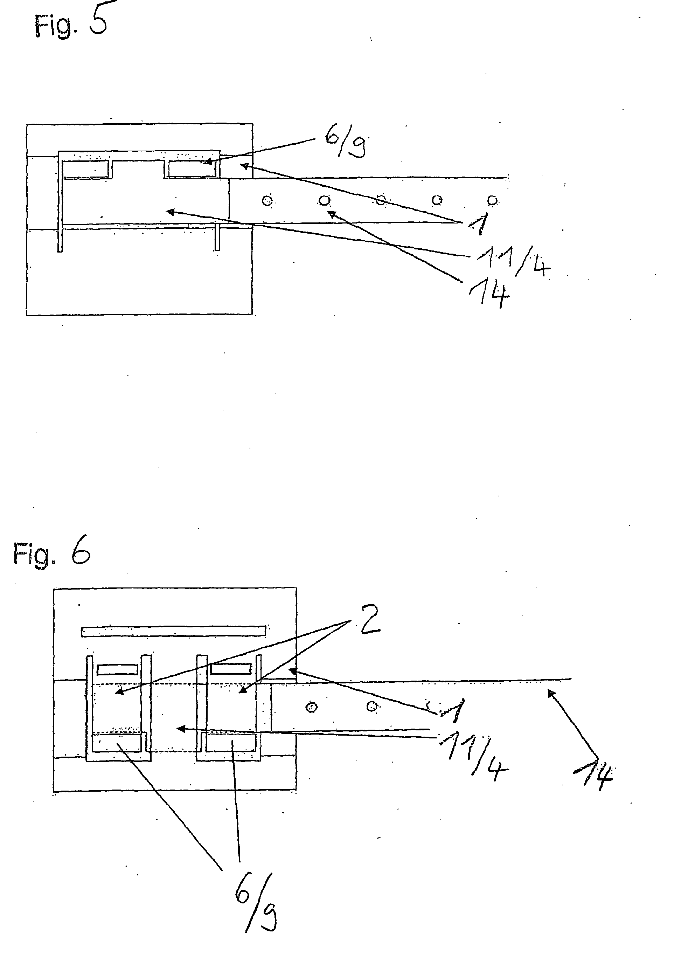

Auch ist den Figuren, insbesondere den Fig. 4 und 5, ein erfindungsgemäßes Rolloband 10 erkennbar. Es ist insbesondere die Zweiteiligkeit des Rollobandes 10 erkennbar, nämlich ein frontseitiges Anschlusselement 11 und ein Metallstreifen 14. Des Weiteren ist erkennbar, dass Löcher oder Stanzungen 13, vorzugsweise in äquidistanten Abständen, auf dem Metallstreifen 14 angeordnet sind.

Das Anschlusselement 11 besteht vorzugsweise aus einem Kunststoff und ist vorzugsweise an den Metallstreifen 14 angespritzt oder angeclipst. Der Metallstreifen 14 ist vorzugsweise flach ausgestaltet und weist im Querschnitt eine in etwa rechteckförmige flache Gestalt auf.

Des Weiteren ist die spezielle Form des Anschlusselementes 11 erkennbar, welches, wie in Fig. 4 L-förmig und wie in Fig. 5 T-förmig ausgestaltet ist. Ein derartiges Anschlusselement 11 eignet sich in besonders vorteilhafter Weise um eine formschlüssige Verbindung mit der erfindungsgemäßen Rollokupplung 1 bereitzustellen.

In Fig. 6 ist weiterhin erkennbar, dass zwei getrennte Schnappverbindungselemente 2 zum Einsatz kommen können. Insbesondere können die Schnappverbindungselemente 2 entsprechend separat verschwenkt werden. Die Aussparung 7 zur formschlüssigen Aufnahme eines Vorsprungs 12 eines Rollobandes 10 wird hier jeweils von den einzelnen Schnappverbindungselementen 2 gebildet.

Die erfindungsgemäße Rollokupplung 1 zeichnet sich insbesondere durch nachfolgende Merkmale aus:
Die Rollokupplung 1 ist vorzugsweise aus einem Kunststoff spritzgegossen. Das Anschlusselement 11 ist an das Metallband 14 aus Kunststoff gespritzt oder angeclipst. Das Anschlusselement 11 und die Rollokupplung 1 haben einen Formschluss. Der Formschluss kann aufgehoben werden indem die Rollokupplung 1 reversibel verformt werden kann (Schnappverbindung). Alternativ ist auch denkbar, dass das Schnappverbindungselement 2 am Anschlusselement 11 ist und die Mitnahmegeometrie an der Rollokupplung 1. Alternativ ist auch denkbar, dass das Schnappverbindungselement 2 ein zwei Komponenten Bauteil ist oder einen Metalleinleger hat um eine Verschnappung zu ermöglichen.
Die Rollokupplung 1 (vgl. insbesondere Fig. 1) kann einen Doppelschnapper (Schnappverbindungselement 2 mit zwei Rastverbindungsmitteln 6) haben und das Anschlusselement kann ausgeprägt sein wie ein "L" oder eine "1" (für T-Variante siehe insbesondere Fig.:5). Die Rollokupplung 1 kann nur einen Schnapper (Schnappverbindungselement 2 mit einem Rastverbindungsmittel 6) haben und das Anschlusselement 11 kann ausgeprägt sei wie ein "U". Die Rollokupplung 1 kann zwei Schnapper (zwei Schnappverbindungselemente 2 mit je einem Rastverbindungsmittel 6) haben die unabhängig von einander bedienbar sind und das Anschlusselement ist als "L" oder "T" ausgeprägt. (Siehe Fig.:4-7).

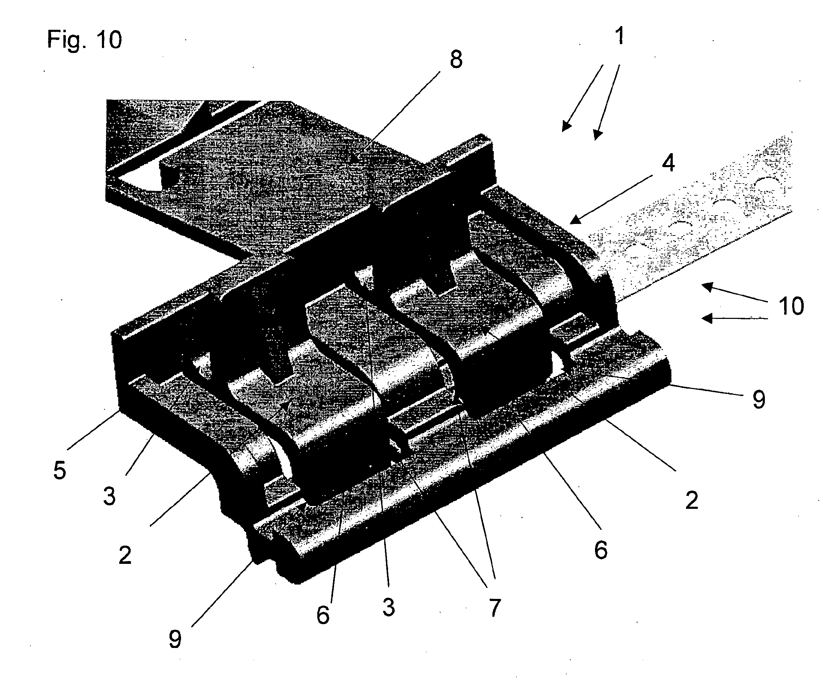

In Fig. 10 ist eine erfindungsgemäße Rollokupplung 1 mit zwei Schnappverbindungselementen 2 dargestellt.

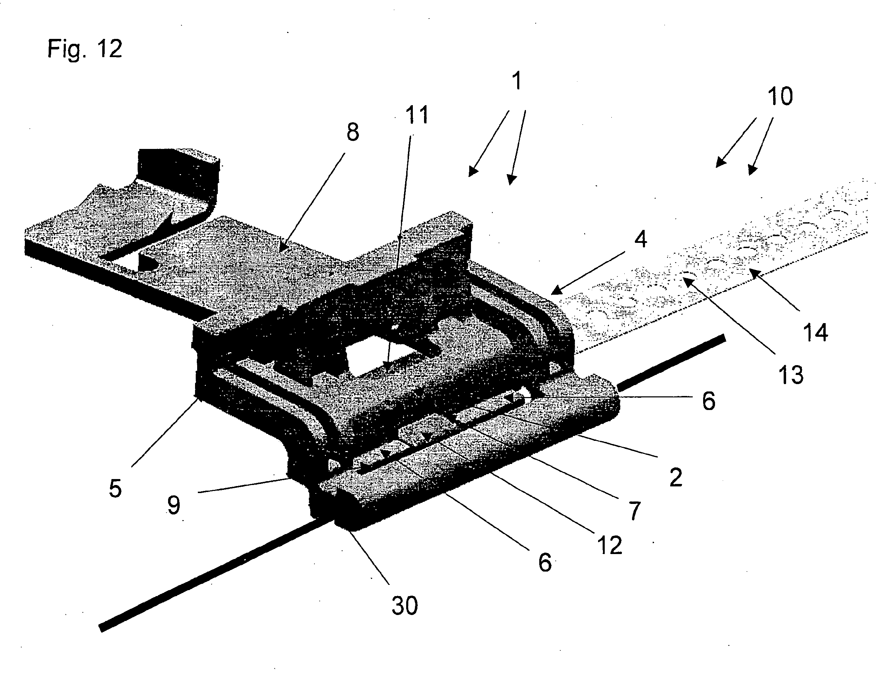

In Fig. 12 ist eine erfindungsgemäße Rollokupplung 1 mit einem Schnappverbindungselement 2 dargestellt. Auch ist beispielhaft ein Antriebselement 30 angedeutet, welches insbesondere als Steigungskabel, Seil und/oder Zahnriemen ausgestaltet sein kann.

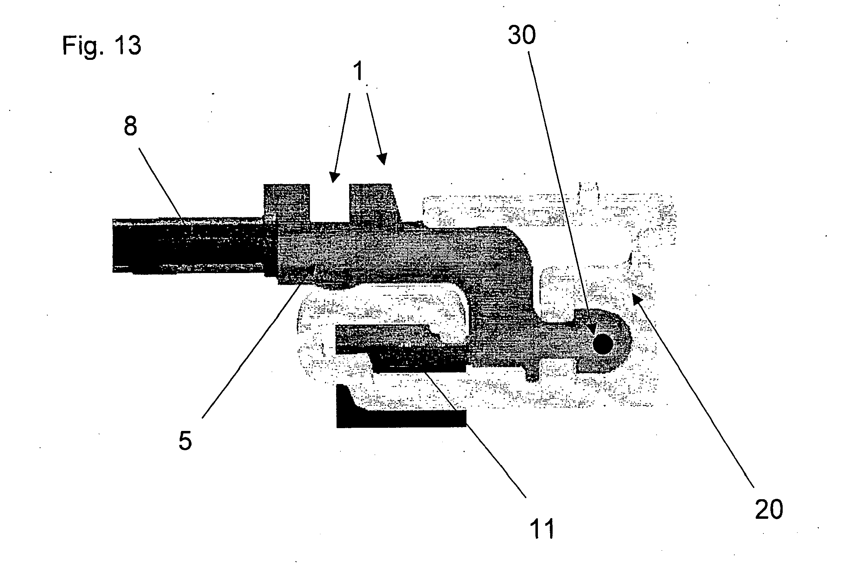

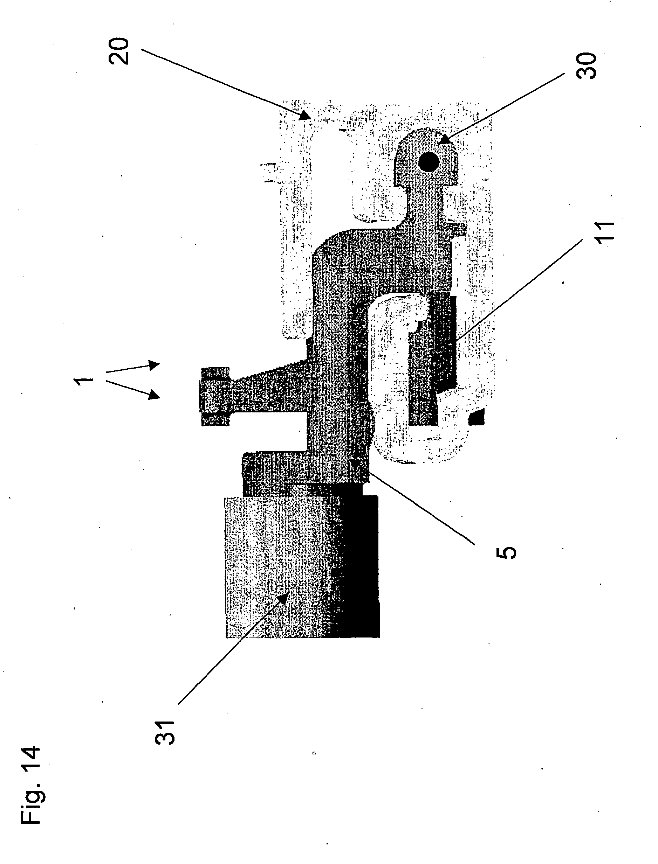

In den Fig. 13 und 14 ist eine Schnittansicht auf eine erfindungsgemäße Rollokupplung dargestellt, wobei insbesondere auch ein mögliches Profil für die Führungsschiene 20 ersichtlich ist.
Auch zeichnet sich die erfindungsgemäße Rollokupplung insbesondere durch nachfolgende weitere Besonderheiten aus. Wenn der Schnapper (Schnappverbindungselement 2) zu schwergängig wäre, könnte eine Freisparung (Bohrung 21) in der Schiene (Führungsschiene 20) ein Aufschnappen mit einem Werkzeug (z.B. Schraubenzieher) ermöglichen. Denkbar wäre auch Schrägen an den zu verschnappenden Bauteilen anzubringen um ein ungewolltes Lösen zu vermeiden.
Insgesamt kann durch die vorgeschlagene Rollokupplung und/oder das erfindungsgemäße Rolloband 10 ein Fahrzeugsonnendachrollo schnell und kostengünstig gefertigt werden, sowie auch in der Werkstatt ausgebaut werde, insbesondere ohne Spezialwerkzeug und besondere Kenntnisse. Ein weiterer Vorteil ist, dass die Verbindung Zugspriegel 31 zu Rollokupplung 1 keine besondere sein muss, sondern es kann jede beliebige verwendet werden, da das Anschlusselement 11 (Mitnehmer) durch die Rollokupplung hindurchfahren kann, der Zugspriegel 31 wird mit der Rollokupplung 1 verheiratet, das Anschlusselement 11 schnappt in die Rollokupplung 1 ein.
Zum technologischen Hintergrund soll noch nachfolgend erläutert werden, dass eine Rollokupplung 1 in einem Fahrzeugsonnendachrollo zur Koppelung eines Rollobandes 10 und eines Zugspriegels 31 verwendet wird. Ferner kann die Rollokupplung 1 als Führungsmittel innerhalb einer Führungsschiene 20 eines Fahrzeugsonnendachrollos Anwendung finden. Ein hier beispielhaft beschriebenes Fahrzeugsonnendachrollo gemäß dem Stand der Technik umfasst zwei Führungsschienen 20, ein flexibles Flächenelement, eine Aufwickeleinrichtung für das flexible Flächenelement, sowie eine Antriebseinrichtung. Ferner umfasst ein Fahrzeugsonnendachrollo den oben bereits erwähnten Zugspriegel 31 und die Rollokupplungen 1. Das Fahrzeugsonnendachrollo ist vorzugsweise im Dachhimmel eines Kraftfahrzeuges unterhalb eines Fahrzeugsonnendaches, d.h. einem zumindest abschnittsweise durchsichtigen und vorteilhafterweise verschiebbaren oder aufstellbaren Fahrzeugsonnendach verbaut. Die Führungsschienen 20 sind vorzugsweise in Längsrichtung des Fahrzeuges ausgerichtet und säumen die Seitenbereiche des Fahrzeugsonnendaches. Es ist weiterhin vorgesehen, dass die Aufwickeleinrichtung für das flexible Flächenelement und die Aufwickeleinrichtung für die flachen Rollobänder 10 zwischen den Führungsschienen 20, vorzugsweise endseitig der Führungsschienen 20 angeordnet sind. Es ist weiterhin vorgesehen, dass das flexible Flächenelement randseitig mit den flachen Rollobändern 10 verbunden ist, wobei die flachen Rollobänder 10 in den Führungsschienen 20 linear verschiebbar aufgenommen sind. Es ist weiterhin vorgesehen, dass das flexible Flächenelement randseitig mit dem Zugspriegel 31 verbunden ist, wobei der Zugspriegel 31 zwischen den Führungsschienen 20 angeordnet und ebenfalls verschiebbar in den Führungsschienen 20 aufgenommen ist. Zur Verbindung der flachen Rollobänder 10 und dem Zugspriegel 31 ist jeweils eine Rollokupplung 1 vorgesehen. Die Rollokupplung 1 ist zumindest abschnittsweise in der jeweiligen Führungsschiene 20 aufgenommen und ist in Längsrichtung der Führungsschienen 20 verschiebbar in den Führungsschienen 20 gelagert. Die Anordnung aus flexiblen Flächenelement, randseitigen flachen Rollobändern 10, Rollokupplungen 1 und dem frontseitigen Zugspriegel 31 ist demnach geeignet in den Führungsschienen 20 entlang der Fahrzeuglängsachse verschoben zu werden. Dementsprechend kann durch Verschieben der Anordnung aus flexiblem Flächenelement, Zugspriegel 31 und den randseitigen Rollobändern 10 das Glasschiebedach wahlweise verdeckt, teilweise verdeckt oder aber vollständig freigegeben werden. Entsprechend diesem Konzept kann das Fahrzeugsonnendachrollo beispielsweise durch manuelle Betätigung des Zugspriegels 31, durch Antrieb des Flächenelementes, durch Antrieb der Rollobänder 10 oder durch direkten Antrieb der Rollokupplung 1 erfolgen.
In einer vorteilhaften Ausgestaltung des vorgeschlagenen Fahrzeugsonnendachrollos kann vorgesehen sein, dass die Führungsschiene 20 mit einer Montagevorrichtung (nicht dargestellt) ausgestattet ist, die an einer vorbestimmten Stelle der Führungsschiene 20 angebracht ist und zur Betätigung des/der Schnappverbindungselemente 2 eingerichtet ist. Das Schwenken des/der Schnappverbindungselemente 2 kann durch einen Werker, sprich manuell oder durch eine Montagevorrichtung in der Führungsschiene 20 erfolgen. Die Montagevorrichtung in der Führungsschiene 20 sitzt an einer bestimmten Stelle und beim Verfahren der Rollokupplung 1 in der Führungsschiene 20 drückt die Montagevorrichtung, die beispielsweise als Rampe ausgestaltet sein kann auf das Schnappverbindungselement 2 und schwenkt das bzw. die Schnappverbindungselemente 2.

## Patentansprüche

1. Rollokupplung (1) für ein Fahrzeugsonnendachrollo, wobei die Rollokupplung (1) mindestens einen Rollobandaufnahmebereich (4) und einen Zugspriegelanschlussbereich (8) aufweist, wobei der Rollobandaufnahmebereich (4) zur formschlüssigen Verbindung mit einem Rolloband (10), das ein flexibles Flächenelement aufnimmt und führt, eingerichtet ist, **dadurch gekennzeichnet, dass** die Rollokupplung (1) einen Grundkörper (5), sowie ein Schnappverbindungselement (2) umfasst, wobei der Rollobandaufnahmebereich (4) zwischen dem Schnappverbindungselement (2) und dem Grundkörper (5) ausgebildet ist.

2. Rollokupplung nach einem der vorhergehenden Ansprüche, **dadurch gekennzeichnet, dass** der Rollobandaufnahmebereich (4) insbesondere das Schnappverbindungselement (2) mit mindestens einer Aussparung (7) zur formschlüssigen Befestigung eines korrespondierenden Anschlusselementes (11) eines Rollobandes (10) ausgestattet ist.

3. Rollokupplung nach einem der vorhergehenden Ansprüche, **dadurch gekennzeichnet, dass** der Rollobandaufnahmebereich (4), insbesondere das Schnappverbindungselement (2) mit mindestens einem Vorsprung (12) zum formschlüssigen Eingriff in ein korrespondierenden Anschlusselementes (11) eines Rollobandes (10) ausgestattet ist.

4. Rollokupplung nach einem der vorhergehenden Ansprüche, **dadurch gekennzeichnet, dass** der Rollobandaufnahmebereich (4) L-förmig, T-förmig, U-förmig oder in Form einer "1" ausgestaltet ist.

5. Rollokupplung nach einem der vorhergehenden Ansprüche, **dadurch gekennzeichnet, dass** das Schnappverbindungselement (2) schwenkbar, insbesondere über eine Biegefalz (3) mit dem Grundkörper (5) verbunden ist.

6. Rollokupplung nach einem der vorhergehenden Ansprüche, **dadurch gekennzeichnet, dass** das Schnappverbindungselement (2) mit mindestens einem Rastverbindungsmittel (6) ausgestattet ist, welches in eine Rastaussparung (9) des Grundkörpers (5) einrasten kann.

7. Rollokupplung nach einem der vorhergehenden Ansprüche, **dadurch gekennzeichnet, dass** zwei Schnappverbindungselemente (2) vorgesehen sind, die jeweils mit einem Rastverbindungsmittel (6) ausgestattet sind, die in eine jeweils zugeordnete Rastaussparung (9) des Grundkörpers (5) einrasten können.

8. Rollokupplung nach einem der vorhergehenden Ansprüche, **dadurch gekennzeichnet, dass** es sich bei der Rollokupplung (1) um ein Formelement aus Kunststoff handelt.

9. Rollokupplung nach einem der vorhergehenden Ansprüche, **dadurch gekennzeichnet, dass** die Rollokupplung (1) einstückig ausgebildet ist.

10. Rollokupplung nach einem der vorhergehenden Ansprüche, **dadurch gekennzeichnet, dass** die Rollokupplung (1) mit einem Metalleinleger ausgestattet ist.

11. Rollokupplung nach einem der vorhergehenden Ansprüche, **dadurch gekennzeichnet, dass** die Rollokupplung (1) mit Führungsmitteln zur verschiebbaren Aufnahme in einer Führungsschiene (20) ausgestattet ist.

12. Rollokupplung nach einem der vorhergehenden Ansprüche, **dadurch gekennzeichnet, dass** die Rollokupplung mit einem Antriebselement (30), insbesondere einem Steigungskabel, einem Seil und/oder einem Zahnriemen verbunden ist.

13. Rolloband (10) zur Aufnahme eines flexiblen Flächenelements in einem Fahrzeugsonnendachrollo, wobei das Rolloband (10) mindestens ein frontseitiges Anschlusselement (11) zum Bereitstellen einer formschlüssigen Verbindung mit der Rollokupplung nach einem der Ansprüche 1 bis 12 sowie einen Metallstreifen (14) aufweist, wobei das Anschlusselement (11) aus einem Kunststoff besteht, **dadurch gekennzeichnet, dass** das Anschlusselement (11) an den Metallstreifen (14) angespritzt oder angeclipst ist.

14. Rolloband nach Anspruch 13, **dadurch gekennzeichnet, dass** der Metallstreifen (14) mit Löchern oder Stanzungen (13) zur Befestigung des flexiblen Flächenelementes eingerichtet ist.

15. Rolloband nach einem der Ansprüche 13 bis 14, **dadurch gekennzeichnet, dass** das Anschlusselement (11) mit einem Vorsprung (12) ausgestattet ist.

16. Rolloband nach einem der Ansprüche 13 bis 15, **dadurch gekennzeichnet, dass** das Anschlusselement (11) mit einer Aussparung ausgestattet ist.

17. Rolloband nach einem der Ansprüche 13 bis 16, **dadurch gekennzeichnet, dass** das Anschlusselement (11) eine T-förmige, L-förmige, U-förmige Gestalt oder die Gestalt einer "1" aufweist.

18. Fahrzeugsonnendachrollo, umfassend mindestens zwei Führungsschienen (20), einen Zugspriegel (31), zwei Rollokupplungen (1), zwei Rollobänder (10) und ein Flächenelement, wobei die Führungsschienen (20) im wesentlichen parallel zueinander angeordnet sind, wobei die Rollobänder (10) in den Führungsschienen verschiebbar angeordnet sind und das Flächenelement zwischen sich aufnehmen, wobei die Rollobänder (10) jeweils an einer Rollokupplung (1) befestigt sind, wobei die Rollokupplungen (1) in den Führungsschienen (20) verschiebbar aufgenommen sind, wobei der Zugspriegel (31) zwischen den Rollokupplungen (1) angeordnet ist, **dadurch gekennzeichnet, dass** es sich bei der Rollokupplung (1) um eine Rollokupplung (1) nach einem der Ansprüche 1 bis 12 handelt.

19. Fahrzeugsonnendachrollo nach Anspruch 18, **dadurch gekennzeichnet, dass** es sich bei dem Rolloband (10) um ein Rolloband (10) gemäß einem der Ansprüche 13 bis 17 handelt.

20. Fahrzeugsonnendachrollo nach einem der Ansprüche 18 oder 19, **dadurch gekennzeichnet, dass** die Führungsschiene (20) mit einer Montagevorrichtung ausgestattet ist, die an einer vorbestimmten Stelle der Führungsschiene angebracht ist und zur Betätigung des/der Schnappverbindungselemente (2) eingerichtet ist.

21. Fahrzeugsonnendachrollo, umfassend mindestens zwei Führungsschienen (20), einen Zugspriegel (31), zwei Rollokupplungen (1), zwei Rollobänder (10) und ein Flächenelement, wobei die Führungsschienen (20) im wesentlichen parallel zueinander angeordnet sind, wobei die Rollobänder (10) in den Führungsschienen verschiebbar angeordnet sind und das Flächenelement zwischen sich aufnehmen, wobei die Rollobänder (10) jeweils an einer Rollokupplung (1) befestigt sind, wobei die Rollokupplungen (1) in den Führungsschienen (20) verschiebbar aufgenommen sind, wobei der Zugspriegel (31) zwischen den Rollokupplungen (1) angeordnet ist, **dadurch gekennzeichnet, dass** es sich bei dem Rolloband (10) um ein Rolloband (10) gemäß einem der Ansprüche 13 bis 17 handelt.

22. Fahrzeugsonnendachrollo nach Anspruch 21, **dadurch gekennzeichnet, dass** es sich bei der Rollokupplung (1) um eine Rollokupplung (1) nach einem der Ansprüche 1 bis 12 handelt.

23. Fahrzeugsonnendachrollo nach einem der Ansprüche 21 oder 22, **dadurch gekennzeichnet, dass** die Führungsschiene (20) mit einer Montagevorrichtung ausgestattet ist, die an einer vorbestimmten Stelle der Führungsschiene angebracht ist und zur Betätigung des/der Schnappverbindungselemente (2) eingerichtet ist.

## Claims

1. Roller blind coupling (1) for a vehicle sunroof roller blind, wherein the roller blind coupling (1) has at least one roller blind strip receiving region (4) and one tension bow joining region (8), wherein the roller blind strip receiving region (4) is provided for form-fitting connection to a roller blind strip (10) which receives and guides a flexible planar element, **characterized in that** the roller blind coupling (1) comprises a basic body (5) and a snap-in connecting element (2), the roller blind strip receiving region (4) being formed between the snap-in connecting element (2) and the basic body (5).

2. Roller blind coupling according to Claim 1, **characterized in that** the roller blind strip receiving region (4), in particular the snap-in connecting element (2), is provided with at least one cutout (7) for the form-fitting fastening of a corresponding joining element (11) of a roller blind strip (10).

3. Roller blind coupling according to one of the preceding claims, **characterized in that** the roller blind strip receiving region (4), in particular the snap-in connecting element (2), is provided with at least one projection (12) for the form-fitting engagement in a corresponding joining element (11) of a roller blind strip (10).

4. Roller blind coupling according to one of the preceding claims, **characterized in that** the roller blind strip receiving region (4) is configured to be L-shaped, T-shaped, U-shaped or in the form of a "1".

5. Roller blind coupling according to one of the preceding claims, **characterized in that** the snap-in connecting element (2) is connected pivotably, in particular via a bending fold (3), to the basic body (5).

6. Roller blind coupling according to one of the preceding claims, **characterized in that** the snap-in connecting element (2) is provided with at least one latching connecting means (6) which can latch into a latching cutout (9) in the basic body (5) .

7. Roller blind coupling according to one of the preceding claims, **characterized in that** two snap-in connecting elements (2) are provided, said snap-in connecting elements each being provided with a latching connecting means (6) which can latch into a respectively assigned latching cutout (9) in the basic body (5).

8. Roller blind coupling according to one of the preceding claims, **characterized in that** the roller blind coupling (1) is a moulded plastic element.

9. Roller blind coupling according to one of the preceding claims, **characterized in that** the roller blind coupling (1) is of single-piece design.

10. Roller blind coupling according to one of the preceding claims, **characterized in that** the roller blind coupling (1) is provided with a metal insert.

11. Roller blind coupling according to one of the preceding claims, **characterized in that** the roller blind coupling (1) is provided with guide means for the displaceable holding thereof in a guide rail (20).

12. Roller blind coupling according to one of the preceding claims, **characterized in that** the roller blind coupling is connected to a driving element (30), in particular a rising cable, a rope and/or a toothed belt.

13. Roller blind strip (10) for holding a flexible planar element in a vehicle sunroof roller blind, wherein the roller blind strip (10) has at least one joining element (11) on the front side for providing a form-fitting connection to the roller blind coupling according to one of claims 1 to 12, and a metal strip (14), wherein the joining element (11) is composed of a plastic, **characterized in that** the joining element (11) is injection-moulded or clipped onto the metal strip (14).

14. Roller blind strip according to Claim 13,
**characterized in that** the metal strip (14) is provided with holes or punched portions (13) for the fastening of the flexible planar element.

15. Roller blind strip according to either of Claims 13 and 14, **characterized in that** the joining element (11) is provided with a projection (12).

16. Roller blind strip according to one of Claims 13 to 15, **characterized in that** the joining element (11) is provided with a cutout.

17. Roller blind strip according to one of Claims 13 to 16, **characterized in that** the joining element (11) has a T-shaped, L-shaped or U-shaped configuration or the configuration of a "1".

18. Vehicle sunroof roller blind, comprising at least two guide rails (20), a tension bow (31), two roller blind couplings (1), two roller blind strips (10) and a planar element, wherein the guide rails (20) are arranged substantially parallel to one another, wherein the roller blind strips (10) are arranged displaceably in the guide rails and hold the planar element therebetween, wherein the roller blind strips (10) are each fastened to a roller blind coupling (1), wherein the roller blind couplings (1) are held displaceably in the guide rails (20), and wherein the tension bow (31) is arranged between the roller blind couplings (1), **characterized in that** the roller blind coupling (1) is a roller blind coupling (1) according to one of Claims 1 to 12.

19. Vehicle sunroof roller blind according to Claim 18, **characterized in that** the roller blind strip (10) is a roller blind strip (10) according to one of Claims 13 to 17.

20. Vehicle sunroof roller blind according to either of Claims 18 and 19, **characterized in that** the guide rail (20) is provided with a mounting device which is fitted at a predetermined point of the guide rail and is provided to actuate the snap-in connecting element/elements (2).

21. Vehicle sunroof roller blind, comprising at least two guide rails (20), one tension bow (31), two roller blind couplings (1), two roller blind strips (10) and a planar element, wherein the guide rails (20) are arranged substantially parallel to one another, wherein the roller blind strips (10) are arranged displaceably in the guide rails and hold the planar element therebetween, wherein the roller blind strips (10) are each fastened to a roller blind coupling (1), wherein the roller blind couplings (1) are held displaceably in the guide rails (20), and wherein the tension bow (31) is arranged between the roller blind couplings (1), **characterized in that** the roller blind strip (10) is a roller blind strip (10) according to one of Claims 13 to 17.

22. Vehicle sunroof roller blind according to Claim 21, **characterized in that** the roller blind coupling (1) is a roller blind coupling (1) according to one of Claims 1 to 12.

23. Vehicle sunroof roller blind according to either of Claims 21 and 22, **characterized in that** the guide rail (20) is provided with a mounting device which is fitted at a predetermined point of the guide rail and is provided to actuate the snap-in connecting element/elements (2).

## Revendications

1. Coupleur de store (1) pour un store de toit ouvrant de véhicule, le coupleur de store (1) comportant au moins une zone de logement de bande de store (4) et une zone de raccordement d'arceau tirant (8), la zone de logement de bande de store (4) étant équipée, pour la liaison par complémentarité de formes, d'une bande de store (10) qui loge et guide un élément de surface flexible, **caractérisé en ce que** le coupleur de store (1) comprend un corps de base (5), ainsi qu'un élément de jonction clipsé (2), la zone de logement de bande de store (4) étant réalisée entre l'élément de jonction clipsé (2) et le corps de base (5).

2. Coupleur de store selon la revendication 1, **caractérisé en ce que** la zone de logement de bande de store (4), notamment l'élément de jonction clipsé (2), est pourvue d'au moins une rainure (7) pour la fixation par complémentarité de formes d'un élément de raccordement (11) correspondant d'une bande de store (10).

3. Coupleur de store selon l'une quelconque des revendications précédentes, **caractérisé en ce que** la zone de logement de bande de store (4), notamment l'élément de jonction clipsé (2), est équipée d'au moins une saillie (12) pour l'emboîtement par complémentarité de formes dans un élément de raccordement (11) correspondant d'une bande de store (10).

4. Coupleur de store selon l'une quelconque des revendications précédentes, **caractérisé en ce que** la zone de logement de bande de store (4) prend une forme en L, en T, en U ou une forme en « 1 ».

5. Coupleur de store selon l'une quelconque des revendications précédentes, **caractérisé en ce que** l'élément de jonction clipsé (2) est relié de façon pivotante au corps de base (5), notamment via un pli par flexion (3).

6. Coupleur de store selon l'une quelconque des revendications précédentes, **caractérisé en ce que** l'élément de jonction clipsé (2) est équipé d'au moins un moyen de liaison d'arrêt (6) pouvant se clipser dans une rainure d'arrêt (9) du corps de base (5).

7. Coupleur de store selon l'une quelconque des revendications précédentes, **caractérisé en ce que** deux éléments de jonction clipsés (2) sont prévus, ceux-ci étant équipés respectivement d'un moyen de liaison d'arrêt (6) pouvant respectivement s'encliqueter dans une rainure d'arrêt (9) respectivement associée au corps de base (5).

8. Coupleur de store selon l'une quelconque des revendications précédentes, **caractérisé en ce que** le coupleur de store (1) est un élément moulé en matière synthétique.

9. Coupleur de store selon l'une quelconque des revendications précédentes, **caractérisé en ce que** le coupleur de store (1) est réalisé d'un seul tenant.

10. Coupleur de store selon l'une quelconque des revendications précédentes, **caractérisé en ce que** le coupleur de store (1) est équipé d'un insert métallique.

11. Coupleur de store selon l'une quelconque des revendications précédentes, **caractérisé en ce que** le coupleur de store (1) est pourvu de moyens de guidage pouvant être logés de façon coulissante dans un rail de guidage (20).

12. Coupleur de store selon l'une quelconque des revendications précédentes, **caractérisé en ce que** le coupleur de store est relié à un élément d'entraînement (30), notamment à un câble élévateur, une corde et/ou une courroie crantée.

13. Bande de store (10) servant au logement d'un élément de surface flexible dans un store de toit ouvrant de véhicule, la bande de store (10) comportant au moins un élément de raccordement (11) côté avant pour offrir une jonction par complémentarité de formes équipée du coupleur de store selon l'une quelconque des revendications 1 à 12 ainsi qu'une bande métallique (14), l'élément de raccordement (11) étant fabriqué à partir d'une matière synthétique, **caractérisée en ce que** l'élément de raccordement (11) est injecté ou clipsé au niveau de la bande métallique (14).

14. Bande de store selon la revendication 13,
**caractérisée en ce que** la bande métallique (14) est pourvue de trous ou d'estampes (13) pour la fixation de l'élément de surface flexible.

15. Bande de store selon l'une quelconque des revendications 13 à 14, **caractérisée en ce que** l'élément de raccordement (11) est équipé d'une saillie (12).

16. Bande de store selon l'une quelconque des revendications 13 à 15, **caractérisée en ce que** l'élément de raccordement (11) est pourvu d'une rainure.

17. Bande de store selon l'une quelconque des revendications 13 à 16, **caractérisée en ce que** l'élément de raccordement (11) prend une forme en T, en L, en U ou une forme en « 1 ».

18. Store de toit ouvrant de véhicule, comprenant au moins deux rails de guidage (20), un arceau tirant (31), deux coupleurs de store (1), deux bandes de store (10) et un élément de surface, les rails de guidage (20) étant disposés pour l'essentiel parallèlement l'un à l'autre, les bandes de store (10) étant disposées de façon coulissante dans les rails de guidage et logeant l'élément de surface entre eux, les bandes de store (10) étant respectivement fixées à un coupleur de store (1), les coupleurs de store (1) étant logés de façon coulissante dans les rails de guidage (20), l'arceau tirant (31) étant disposé entre les coupleurs de store (1), **caractérisé en ce que** le coupleur de store (1) est un coupleur de store (1) selon l'une quelconque des revendications 1 à 12.

19. Store de toit ouvrant de véhicule selon la revendication 18, **caractérisé en ce que** la bande store (10) est une bande de store (10) selon l'une quelconque des revendications 13 à 17.

20. Store de toit ouvrant de véhicule selon l'une quelconque des revendications 18 ou 19, **caractérisé en ce que** le rail de guidage (20) est équipé d'un dispositif de montage disposé à un endroit prédéfini du rail de guidage et prévu pour l'actionnement du ou des éléments de jonction clipsés (2).

21. Store de toit ouvrant de véhicule, comprenant au moins deux rails de guidage (20), un arceau tirant (31), deux coupleurs de store (1), deux bandes de store (10) et un élément de surface, les rails de guidage (20) étant disposés pour l'essentiel parallèlement l'un à l'autre, les bandes de store (10) étant disposées de façon coulissante dans les rails de guidage et logeant entre eux l'élément de surface, les bandes de store (10) étant respectivement fixées à un coupleur de store (1), les coupleurs de store (1) étant logés de façon coulissante dans les rails de guidage (20), l'arceau tirant (31) étant disposé entre les coupleurs de store (1), **caractérisé en ce que** la bande de store (10) est une bande de store (10) selon l'une quelconque des revendications 13 à 17.

22. Store de toit ouvrant de véhicule selon la revendication 21, **caractérisé en ce que** le coupleur de store (1) est un coupleur de store (1) selon l'une quelconque des revendications 1 à 12.

23. Store de toit ouvrant de véhicule selon l'une quelconque des revendications 21 ou 22, **caractérisé en ce que** le rail de guidage (20) est équipé d'un dispositif de montage disposé à un endroit prédéfini du rail de guidage et prévu pour l'actionnement du ou des éléments de jonction clipsés (2).
